# EUROPEAN PATENT SPECIFICATION

(11) **EP 0 425 060 B1**
(45) Date of publication and mention of the grant of the patent: **23.08.1995**
(21) Application number: 90250266.5
(22) Date of filing: 18.10.1990
(51) Int. Cl.: B29C 45/56, B29C 45/72, B29C 45/17, B29C 45/78

(54) **Process for injection molding and apparatus therefor**
Verfahren zum Spritzgiessen und Vorrichtung dafür
Procédé pour mouler par injection et dispositif à cet effet

(30) Priority: 27.10.1989 JP 278473/89; 27.10.1989 JP 278474/89; 27.10.1989 JP 278475/89
(43) Date of publication of application: 02.05.1991
(73) Proprietor: MITSUBISHI JUKOGYO KABUSHIKI KAISHA, Tokyo 100 (JP)
(72) Inventor: Kasai, Masayoshi, c/o Nagoya Techn. Inst., Nakamura-ku, Nagoya, Aichi Pref. (JP); Kuroda, Hideo, c/o Nagoya Techn. Inst., Nakamura-ku, Nagoya, Aichi Pref. (JP); Tamura, Yukio, c/o Nagoya Techn. Inst., Nakamura-ku, Nagoya, Aichi Pref. (JP); Shikase, Yoshio, c/o Nagoya Machinery Works,, Nakamura-ku, Nagoya, Aichi Pref. (JP); Kubota, Kouji, c/o Nagoya Machinery Works,, Nakamura-ku, Nagoya, Aichi Pref. (JP)
(74) Representative: Meissner, Peter E., Dipl.-Ing.

(56) References cited:
- DE-B- 1 220 116
- FR-A- 2 272 823
- FR-A- 2 333 635
- US-A- 4 164 531
- PATENT ABSTRACTS OF JAOAN, vol.12, no.212(M-710)(3059)17 June 1988 & JP-A-63 013 726 (MITSUBISHI HEAVY IND.LTD.) *abstract*
- PATENT ASTRACTS OF JAPAN, vol. 12, no.332 (M738(3179) 8 September 1988 & JP-A-63 094 808 (TOSHIBA MACH.CO.) *abstract*
- PATENT ABSTRACTS OF JAPAN vol.10, no. 114 (M-473)(2171) 26 April 1986 & JP-A-60 242 022 (MITSUBISHI JUKOGYO) *abstract*
- PATENT ABSTRACTS OF JAPAN vol.12, no.454 (M-769)(3301) 29 November 1988 & JP-A-63 182 120 (UBE IND.LTD.) *abstract*
- PATENT ASTRACTS OF JAPAN vo. 13, no. 90(M-803)(3438) 2 March 1989 & JP-A-63 283 922 (MEIKI CO. LTD) *abstract*
- PATENT ABSTRACTS OF JAPAN vol. 11, no. 94 (M-574)(2541) 25 March 1987 & JP-A-61 244 515 (HITACHI LTD.) *abstract*
- PATENT ABSTRACTS OF JAPAN vol.13, no.514 (M-894)(3862) 17 November 1989 & JP-A-1 208 114 (TOYOTA MOTOR CORP.) 22 *abstract*

## Description

### FIELD OF THE INVENTION AND RELATED ART STATEMENT

The present invention relates to a process of low clamping pressure injection molding for producing injection-molded plastic products with high dimensional accuracy under a lower molding pressure. US-A-4 64 531 discloses a process and apparatus wherein a post-compression is established by using movable mould parts after the mould lavity is filled.

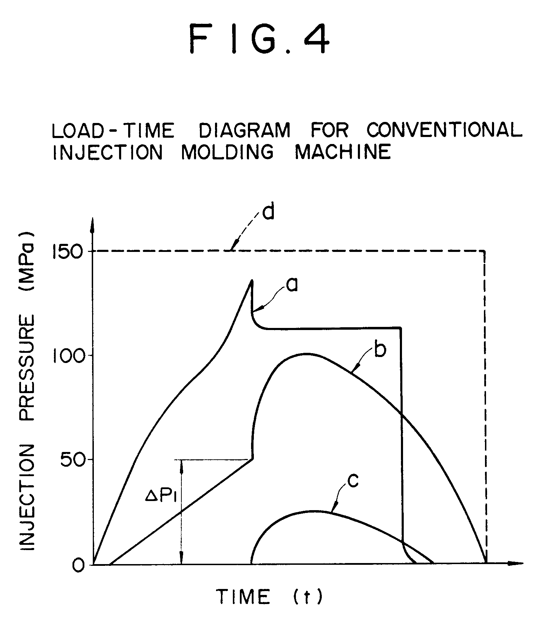

Conventional injection molding machines employ high molding pressures ranging from 50 to 100 MPa, so that they reveal disadvantages, such that they often bring about molded products having distorted portions due to high internal stress after the molding, resulting in a lower dimensional accuracy, that an expensive metal mold has to be employed and that the working life of the metal mold is relatively short. For further explaining the circumstances, a typical load-time diagram showing the course of variation of the molding pressure with time in an injection cycle for conventional injection molding machine is given in Fig. 4 appended. Here, Curves a, b, c and d show the course of variation of the injection pressure, of the inlet pressure of the mold cavity, of the terminal end pressure of the mold cavity and of the clamping pressure respectively. As seen from the Curves a, b, c and d of Fig. 4, higher pressures are required both for the injection pressure, for the mold internal pressure and for the clamping pressure. This is assumed to be due to a high pressure drop within the narrow mold cavity owing to the forced flow of the molten resin having a higher viscosity, and thus, causing a higher flow resistance upon molding of shaped products which in general have higher L/t-values (i.e. length/wall thickness of the molded article) and thus longer flow path.

Conventional injection molding machines reveal a considerable unbalance between the mold internal pressures, namely the pressures at the cavity inlet and the cavity terminal end, as shown by the typical load-time curves b and c for the mold internal pressures. As a result, a higher stress may appear in the mold metal due to such unbalance in the internal pressures. Thus, the metal mold of conventional injection molding machine should have large size with greater weight and is expensive, since higher strength is required for the material of construction thereof.

In a molding of plastic resin, a compensation of the size reduction incidental to the cooling of the molded article should be incorporated. In an injection molding, however, an imposition of an effective pressure onto the molten resin in the mold cavity becomes hindered when the gate is clogged or sealed, whereby the cavity internal pressure will then be settled in the unbalanced state as mentioned above and the molded resin will be cured as such upon cooling. Here, the unbalance of the internal pressure is frozen in the molded article as an internal stress. This may cause defective dimensional stability and occurrence of distortion and sink mark. A waste of useless energy due to occurrence of pressure drop etc. may also be taken into account of.

Metal molds made of ZAS (a zinc alloy) enployed conventionally for molds for limited production of moldings are apt to be subjected to deformation by internal pressure, formation of flashes in the molded articles due to opening or spacing between the parting faces, damages of the mold and decreased working life, though they are available at a price about half as high as that of steel mold (made of, for example, S55C or so on). If such deformation of the mold would be able to be limited to an extent comparable to that expected for carbon steel mold, a mass production of moldings using ZAS mold could be realized. A comparison of the data for Young's modulus and the maximum permissible internal pressure of mold between ZAS and steel is given in Table 1 below.

**Table 1**

| Young's Modulus and Max. permissible Internal Pressure for Mold Materials | | |
|---|---|---|
| Material of Mold | Young's Modulus (MPs) | Max. permis. Int. Press. (MPa) |
| Steel | 21 | 100 |
| Zn-alloy (ZAS) | 4.5 | 20 |

As seen in Table 1, it is recognized that mass production of moldings would be possible by employing a ZAS mold as the case may be with steel mold, when the mold internal pressure could be limited below 20 MPa, since deformation of mold is reversely proportional to the Young's modulus of the mold material.

Several proposals have been made for processes for injection molding and for apparatuses therefor, such as seen in the Japanese Patent Application Kokai Nos. 167133/1983, 21225/1986 and 241114/1986, without disclosing any solution of the above problems.

### OBJECT AND SUMMARY OF THE INVENTION

By the present invention, it is contemplated to provide a process and apparatus for effecting injection molding of plastic resin products under a low clamping pressure in which the molding can be realized with a maximum internal pressure below 20 MPa or with an molding pressure of 1/5 of that encountered normally in steel molds, as corresponding to the ratio of Young's modulus of ZAS to that of steel, in order to realize rediction of the investment cost for mold.

The above theme of the present invention can be solved by the process and apparatus according to the present invention which are described below.

Thus, one aspect of the present invention resides in a process for effecting injection molding of plastic resin products on an injection molding apparatus including a metal mold composed of a slidable mold element and a fixed mold element defining together the mold cavity, an actuator for sliding the slidable mold element and an injection means with an injection nozzle permissible of adjusting the nozzle flow path section, comprising a first molding step of injecting a molten resin into the mold cavity which has been preset by the slidable mold element so as to include a post-compression margin to be compressed afterwards in a second molding step, to effect the injection under a reduced molding pressure, while causing generation of a shearing energy in the injected flow of the molten resin by throttling the nozzle, to effect a temperature elevation and, thus, a viscosity reduction of the molten resin, until the mold cavity has been filled up, and a second molding step of compressing the resin so charged in the mold cavity by operating the slidable mold element to compress the charged resin to compensate said post-compression margin, so as to allow an effective pressing forced to be imposed onto the charged resin within the mold cavity also after the gate has been sealed.

Another aspect of the present invention resides in further generation of a shearing energy in the injected flow of the molten resin by incorporating a means for throttling the flow path of the molten resin and/or a means for heating the molten resin before being injected into the mold cavity.

A further aspect of the present invention resides in generation of a shearing energy in the injected flow of the molten resin by incorporating, together with a throttling of the injection nozzle, a means for throttling the flow path of the molten resin and/or a means for heating the molten resin before being injected into the mold cavity.

The present invention also provides an apparatus for effecting injection molding of a plastic resin including a metal mold composed of a slidable mold element and a fixed mold element defining together the mold cavity, an actuator for gliding the slidable mold element and an injection means having an injection nozzle permissible of adjusting the nozzle flow path section, comprising a means for settling the pertinent position of the slidable mold element relative to the fixed mold element to be determined by taking into account of the amount of volume reduction of the molded resin product due to the cooling thereof after the injection molding including a spacer member interposed between said slidable mold element and said fixed mold element as well as a position sensor for detecting the stroke position of the spacer member and a means for adjusting the flow rate and the molding pressure upon each injection cycle in linkage with a means for varying the flow path section of the nozzle for the molten resin, for realizing reduction in the viscosity of the molten resin and, thus, in the pressure drop of the flowing resin within the mold cavity.

A further aspect of the present invention resides in a further means for elevating the temperature of the plasticized resin including a means for throttling the flow path of the molten resin to the mold cavity and/or a means for settling a higher temperature of the heater in the screw plasticing region is provided, for increasing the screw back pressure or for increasing the rate of revolution of the screw.

A still further aspect of the present invention resides in a means for adjusting the flow rate and the molding pressure upon each injection cycle in linkage with a means for varying the flow path section of the nozzle for the molten resin is provided, for realizing reduction in the viscosity of the molten resin and, thus, in the pressure drop of the flowing resin within the mold cavity.

As described above, the injection of the molten resin into the mold cavity can be realized in the process according to the present invention under a reduced folding pressure by employing a two step molding in which the molten resin is injected, in the first molding step, into the mold cavity settled by operating the slidable mold element so as to include a post-compression margin to be compensated by compression in the second molding step, since thereby the pressure drop of the molten resin flowing within the mold cavity is reduced. By throttling the injection nozzle and/or by passing the molten resin through a narrow path of resin flow at a high shearing velocity upon the injection, the temperature of the molten resin is elevated by the shearing heat generated, causing thus reduction of the viscosity of the molten resin, and it is made possible to inject molten resin, of which viscosity has been reduced as above and eventually further with assist by a means for elevating the temperature of the molten resin, into the mold cavity with the pressure drop within the mold cavity, and thus, the molding pressure being thus additionally reduced.

By the post-compression of the injected resin by operating the slidable mold element after completion of the injection in the first molding step, an effective pressure will be imposed onto the molded resin even after the gate has been sealed, whereby a molded article of high density with scarce internal stress can be obtained.

### BRIEF DESCRIPTION OF THE DRAWINGS

Fig. 1 is a schematic flow chart showing the outlined construction of a first embodiment of the apparatus according to the present invention with its flow line connections.

Fig. 2 shows an essential part around the injection nozzle of the apparatus of Fig. 1 in an enlarged axial section.

Fig. 3 shows an essential part of the means for settling the position of the slidable mold element of the apparatus of Fig. 1.

Fig. 4 is a load-time diagram for a conventional injection molding machine.

Fig. 5 is a load-time diagram for an apparatus according to the present invention.

Fig. 6 shows the location of sensers for detecting pressure and temperature in an experimental mold according to the present invention.

Fig. 7 is a chart showing the sensibilities of wall thickness of the molded article, gate dimension and injection rate on the reduction of molding pressure.

Fig. 8 is a PvT diagram of injection molding for an ABS resin.

Fig. 9 is a schematic flow chart showing the outlined construction of a second embodiment of the apparatus according to the present invention with its flow line connections.

Fig. 10 shows the essential part for the second embodiment apparatus of Fig. 9 in an enlarged section.

### DETAILED DESCRIPTION OF PREFERRED EMBODIMENTS

Below, the invention will be described by way of Examples with reference to the appended Drawings.

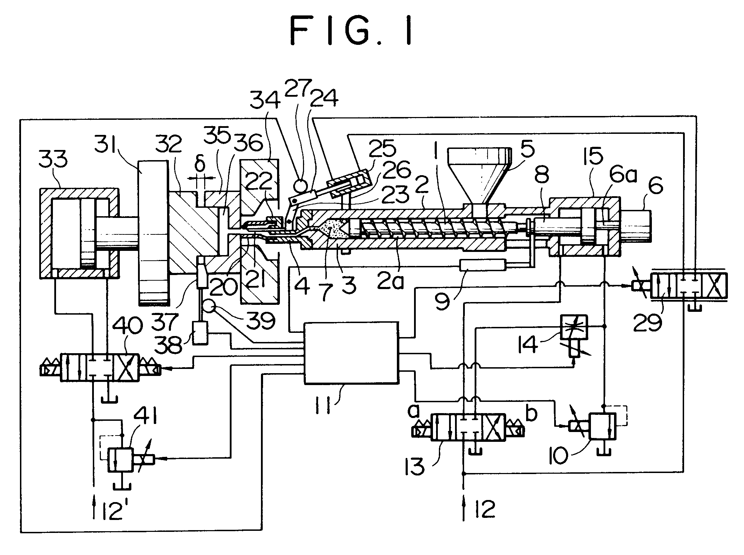

In the first embodiment shown in Fig. 1, a screw 1 is arranged extending slidably within a closed space 2a defined by a cylinder 2, an end cap 3 and a throttled nozzle 4. The raw resin to be molded is supplied into a hopper 5 from which it is fed to the cylinder 2 and is plasticized and melted by the action of the screw 1 rotated by a hydraulic motor 6 together with heating by a not shown heater. The thus melted resin is sent forward by the screw and is stored at the cylinder end as molten resin stock 7. The axis 6a of the hydraulic motor is held in a spline engagement with an injection ram 8 so as to rotate integrally with it, while permitting free axial slide with each other. 9 is a position sensor for the screw 1. 10 is a electromagnetic relief valve. The screw 1 is so actuated that the hydraulic fluid is supplied from a hydraulic fluid source 12 upon a command from a central control unit 11, to the injection cylinder 15 via an electromagnetic control valve 13 and a flow rate control valve 14 to cause the molten resin stock 7 be injected into the mold cavity.

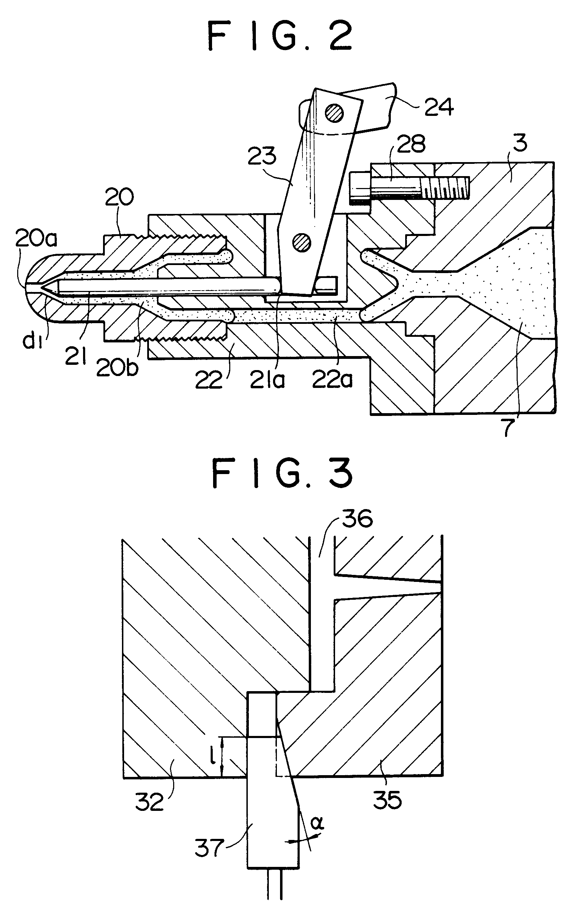

The particulars of the throttled nozzle 4 are shown in Fig. 2 in an enlarged axial section. The nozzle 20 having inserted in the central flow path a needle pin 21 is firmly secured on the front end of a valve body 22 commnicating via the end cap 3 to the cylinder 2. the needle pin 21 is connected with a lever 23 which is pivotingly connected to a connection link 24 through a cut-off 21a provided on the needle pin 21, whereby it is driven by a hydraulic driving means 25 shown in Fig. 1. The hydraulic driving means 25 is mounted fixedly on the cylinder 2 via a bracket 26. A position sensor 27 detects the position of stroke of the piston 24 and, thus, the position of the fowarding end or the retoceding end of the needle pin 21. The molten resin flows through a plurality of canals 22a (Fig. 2) distributed over the circumference of the valve body 22 snd a flow path 20b and discharges out of the nozzle hole 20a. The valve body 22 is mounted on the end cap 3 by screw bolts 28 and the nozzle 20 is screwed in the valve body 22. The needle pin 21 is inserted in the valve body 22 freely slidably with the front end thereof being held so as to left a gap d₁ between it and the nozzle hole inner face and the rear end thereof being fixed to the lever 23 as mentioned above. A servo valve 29 serves for servo controlling the gap d₁ by detecting the position of stroke of the hydraulic driving means 25 to producing thereby detection signals which are sent to the central controller 11 in which the signals are converted into actuation signals for sliding the needle pin 21 to settle the gap at d₁. Here the actuation signals from the detected signals are compared with the signals for a preset standard for d₀ and the difference thereof, namely, incremental or decremental signals are supplied to the servo valve 29.

During the plasticizing stage, the gap d₁ is closed by forwarding the needle pin 21, in order to prevent flowing out of the molten resin of low viscosity after it has been plasticized and melted. During the injection step, the needle pin is retrogressed so as to reach full opening of the gap d₁.

A slidable plate 31 (Fig. 1) having fixed thereto a slidable mold element 32 is arranged so as to allow its slide by a clamping cylinder 33. The slidable mold element 32 engages with a fixed mold element 35 mounted fixedly on an immovable plate 34 and defines together a mold cavity 36. Upon molding, the mold elements are brought into engagement in the first molding step so as to thereby effect a primary clamping with a preset cavity space including a post-compression margin δ which will be compensated by compression in the second molding step. In order to settle the post-compression margin δ more accurately, a spacer member 37 having a form of wedge is interposed between the slidable mold element 32 and the fixed mold element 35 under control by a driving means 38. To control the insertion stroke of the wedge spacer 37 in between the two mold elements more precisely, a position sensor 39 is provided for detecting the stroke position of the wedge spacer 37. The wedge angle α of the spacer 37 is so selected that a minute adjustment of the compression margin δ can be attained by the adjustment of lapping length ℓ of the spacer with the mold elements. In many cases, several wedge spacers 37 are disposed between the two mold elements (35, 32) under a uniform distribution over the circumference of the mold elements. To effect control of operation of the clamping cylinder 33, an electromagnetic change-over valve 40 and an electromagnetic relief valve are provided, which serve for controlling the rate of supply of the hydraulic liquid from the hydraulic liquid source 12 under control by a control signal from the controller 11.

Motivated by a signal from the controller 11, a highly fluidized molten resin in the resin stock 7 is now injected into the cavity 36 preset with the post-compression margin δ from the nozzle 4 at a high injection velocity to fill the cavity. The controller 11 gives out a signal to the electromagnetic change-over valve 40 and to the electromagnetic relief valve 41, after the injection has been finished, to cause the primary clamping pressure to be reduced. The wedge spacers 37 are retroceded before the gap d₁ of the throttled nozzle 4 is closed by a signal supplied to the servo valve 29. Then, in the second molding step, the slidable mold element 32 is operated to compress the cavity 36 at a predetermined secondary clamping pressure for a predetermined period of time by each command signal supplied from the controller 11 to the electromagnetic change-over valve 40 and to the electromagnetic relief valve 41. Now, the molded article is taken out after the mold has been cooled and the molded article has been sufficiently cured, by opening the mold by operating the slidable mold element 32.

Below, the experimental results obtained by carrying out the process according to the present invention are set forth.

### Molding Pressure Reduction

### Experimental Condition

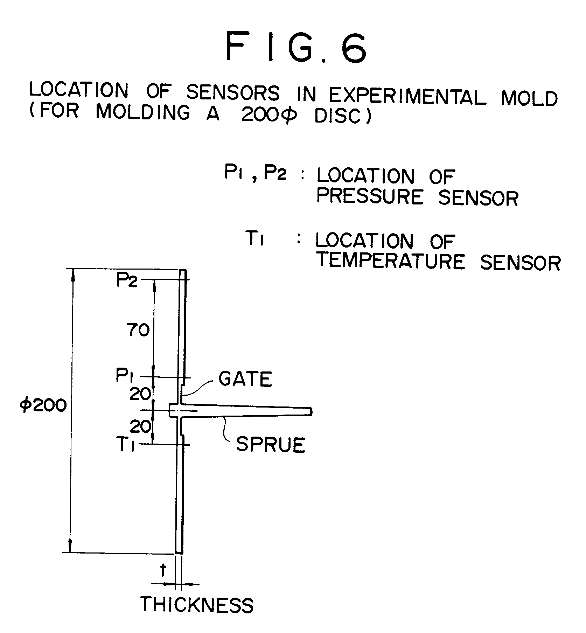

Using a mold for molding a 200 ⌀ circular disc, a sensibility analysis in an experiment for reducing the molding pressure was carried out under the conditions:
- Apparatus: : An injection molding machine of 900/220 MPa
- Mold: : For molding a 200 ⌀ circular disc (See Fig. 6) with a gate size (disc gate) of 0.3, 0.7 and 1.0 mm and a wall thickness of the molded disc of 1.3 mm
- Resin: : Tafrex 210-W (an ABS resin) of the firm Mitsubishi Monsanto Chemical Co.
- Molding: : Mold temperature of 50, 100 and 130 °C Resin temperature of 210, 250 and 290 °C Injection rate at 50, 100, 200 and 500 cm³/sec
Using a mold for 200 ⌀ circular disc, a mold internal pressure was detected at two distant positions (P₁ at the entrance of the cavity and P₂ at the cavity terminal end) and the resin injection temperature was observed. By "molding pressure", it is defined as the pressure at cavity entrance upon completion of the injection (at the occasion at which the cavity terminal end pressure reaches zero).

### Experimental Results

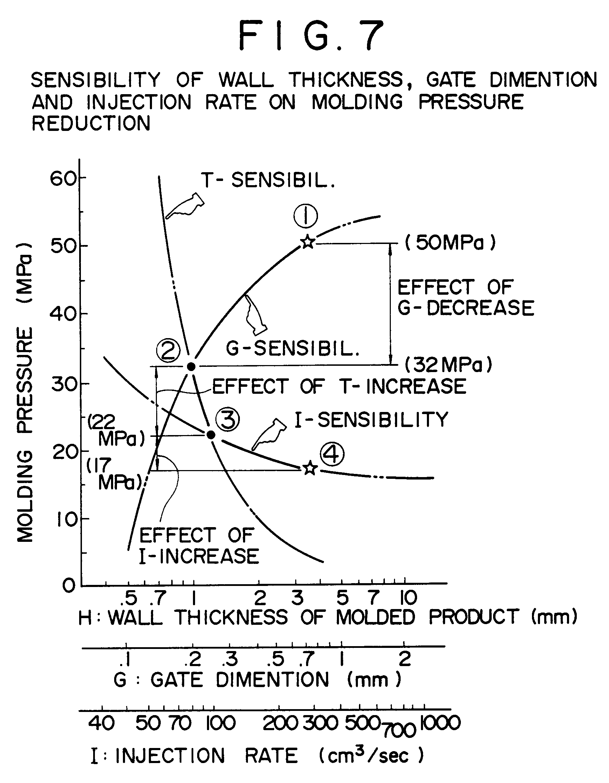

In this experiment, no acceptable difference of the sensibility on the mold temperature was recognized. Assuming the gate dimension (wall thickness of the molded article), the resin temperature and the injection rate as the explanatory variables and the molding pressure as the charactaritic value, each result obtained for each experimental condition was analyzed by "composite variables multiple regression analysis". By employing the resulting multiple regression formula, each characteristic value for each variation of the explanatory variables is re-calculated, whereby the sensibility of each explanatory variable on the reduction of the molding pressure can be determined. The results of analysis of the sensibility for the gate dimension, for the wall thickness of the molded article and for the injection rate are given as a graph in Fig. 7. Taking a value of wall thickness of 1 mm and a vale of gate dimension of 0.7 mm as standards, the course for reducing the observed value of the molding pressure of 50 MPa to a value of 20 MPa is as follows:

First, by causing heat generation by throttling the gate dimension from 0.7 mm to 0.2 mm, the molding pressure can be reduced from 50 MPa to 32 MPa (from point ① to point ② on the diagram of Fig. 7) (effect of gate throttling). Second, by increasing the wall thickness of the molding from 1 mm to 1.2 mm, the molding pressure can be reduced from 32 MPa to 22 MPa (from point ② to point ③ on the diagram) (effect of wall thickness increase). Third, by increasing the injection rate from 100 cm³/sec to 300 cm³/sec, the molding pressure can be reduced from 22 MPa to 17 MPa (from point ③ to point ④ on the diagram) (effect of injection rate increase). Thus, a final molding pressure lower than 20 MPa is attainable.

In the above molding pressure decreasing effects, the items 1 and 3 correspond both to a resin temperature elevation effect due to the heat generation from shearing energy upon passing the molten resin through the gate. While the above experiments were carried out by throttling the gate of the mold, it is evident that the same effects can be attained by throttling the nozzle. Here also, it is possible to reduce the molding pressure from 50 MPa to 20 MPa.

### Compression Molding after the Injection

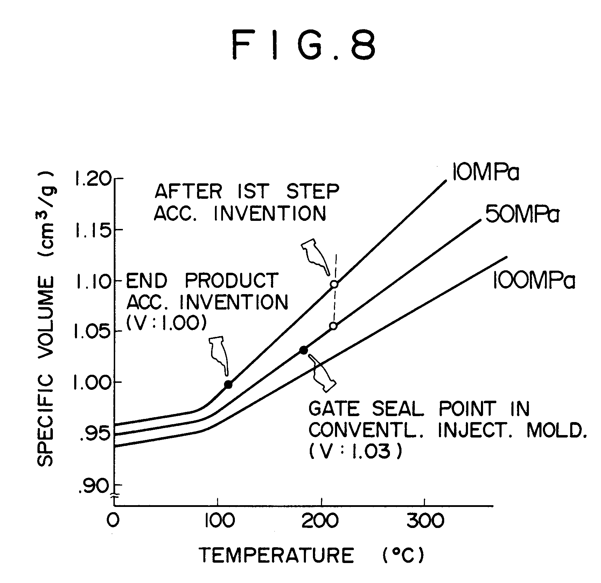

Using an ABS resin "Tafrex 210", a PvT variation curves were obtained which is shown as PvT diagram in Fig. 8. Since no effective pressure will be imposed, after the gate has been clogged or sealed, onto the mold cavity even if the injection was effected at a resin temperature of 210°C while maintaining a pressure of 50 MPa in the case of injection molding, the specific volume is determined by the time until the gate is sealed. In the case shown in Fig. 6, the specific volume amounted to 1.032 cm³/g. On the other hand, by effecting a post-compression molding in the second molding step after the first molding step of low pressure injection according to the present invention, a final specific volume of 1.0 cm³/g can be attained even by employing a low molding pressure of, for example, 10 MPa, by pressing the injection molded heat resistant ABS resin at a thermal deformation temperature of 110°C , since an effective pressure can be imposed onto the molded resin at temperatures up to a temperature near the thermal deformation point. In this manner, a high density molded article having a density even higher than that of the injection molded article can be obtained.

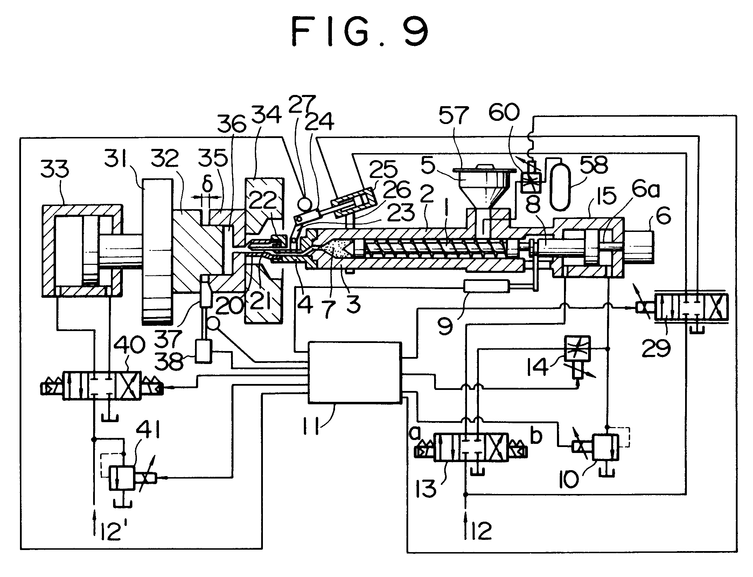

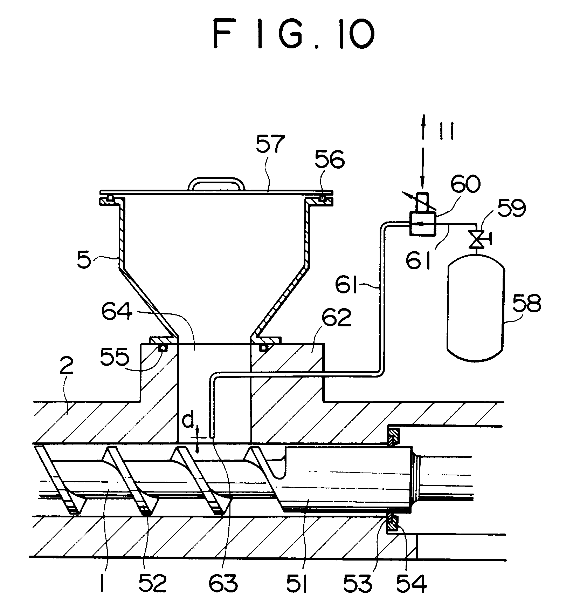

Figs. 9 and 10 illustrate the second embodiment of the process according to the present invention. When the plasicizing is realized at high temperatures, a danger of occurrence of deterioration of the material properties of the molten resin is to be expected, since the resin is subjected to high temperature for considerable period of time, causing thus oxidative derioration of the resin. In order to prevent such an oxidative deterioration of the material, an oxidative deteriolation preventing means may be incorporated in the injection molding apparatus as shown in Fig. 1, which is illustrated by its fundamental construction in Fig. 9, wherein the same elements as those shown in Figs. 1 and 2 are denoted with the same numeral symbols.

Fig. 10 is an enlarged sectional view of the second embodiment of the present invention of Fig. 9.

In the example shown in Fig. 10, the shaft sealing portion 51 of the screw 1 has the same diameter with the screw flight 52. To attain a gas tightness, a packing 53 is fitted to the cylinder 2 by a packing gland 54 through not shown bolts. In order to keep the gas tightness between the cylinder 2 and the hopper 5 and between the hopper 5 and the hopper cover 57, O-rings 55 and 56 are arranged. In order to maintain nitrogen atmosphere around the hopper area, a nitrogen gas bomb 58 is employed with a stop valve 59 and a flow rate control valve 60. A nitrogen gas conduit 61 is guided through the hopper cylinder 62 and is connected to a nitrogengas nozzle 63. The nozzle 63 is disposed at a position distant from the screw 1 by a gap d. A stop valve 69 serves to shut up the line upon exchange of the gas bomb 58.

In a continuous molding operation, the hopper portion 64 is filled with nitrogen gas by flowing nitrogen gas at a constant rate operated by the command signal from the central controller 11, whereby oxidative deterioration of the molten resin is prevented.

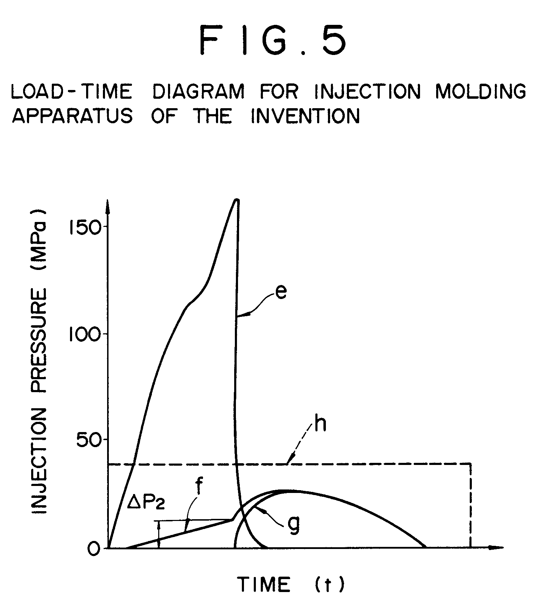

By the process according to the invention, the cavity entrance pressure can considerably be reduced, whereby a load-time relationship as shown in Fig. 5 was able to attain. Comparing the pressure drop Δp₂ inside the cavity in this embidiment with Δp₁ of the conventional process, it is seen that a considerable decrease in the pressure drop is achieved by the present invention due to the reduction in the viscosity of the molten resin. In addition, the unbalance of the cavity entrance pressure with the cavity terminal end pressure is also eliminated almost completely. During the post-compression at a predetermined pressure h of the low pressure-injected molding by the slidable mold element after completion of the injectio, only a little difference between the entrance pressure f and the terminal end pressure g exists, so that no excessive unbalance in the internal pressure occurs. Due to the lower pressure difference between the entrance and the terminal end of the cavity, a relatively low compression force is required, which contributs to an economization of energy consumption.

By the process according to the invention, it is possible to effect the injection molding under a lower cavity entrance pressure and to carry out the post-compression after the injection by a lower compression force, so that it is enough to use a ZAS mold to effct such an injection molding.

By the process of the present invention, a large reduction of the molding pressure, for example, from 50 MPa to 17 MPa, namely below 20 MPa, by incorporating a mold cavity thickness increasing effect by injecting, in the first step, the molten resin into the mold cavity held at a preset cavity space including the post-compression margin to be compensated afterwards in the second step and a resin temperature increasing effect due to a heat generation by shearing energy caused by throttling of the injection nozzle or of the resin flow path, due to employment of a high temperature plasicizing and due to employment of a high-speed injection. After carrying out the post-compression in the second step following the first step of low pressure injection, a molded article having higher dimensional stability can be obtained even under a lower compressive pressure of, for example, 10 MPa. Thus, in the process according to the present invention, a considerably lower clamping force as compared with the conventional practice can be employed. Therefore, it is now made possible by the process according to the present invention to realize injection molding under lower pressure than the conventional technique, so that employment of a mold of ZAS (a zinc alloy), which was heretofore not allowed for mass production of injection molded artcles, becomes now possible for such mass production, bringing about thus a reduction in the investment cost for the mold, lowering of energy consumption and reduction of the scale or size as well as the installation space of injection molding apparatus due to employment of lower clamping force.

## Claims

1. A process for effecting injection molding of plastic resin products on an injection molding apparatus including a metal mold composed of a slidable mold element and a fixed mold element defining together the mold cavity, an actuator for sliding the slidable mold element and an injection means with an injection nozzle permissible of adjusting the nozzle flow path section, comprising a first molding step of injecting a molten resin into the mold cavity which has been preset by the slidable mold element so as to include a post-compression margin to be compressed afterwards in a second molding step, to effect the injection under a reduced molding pressure, while causing generation of a shearing energy in the injected flow of the molten resin by throttling the nozzle, to effect a temperature elevation and, thus, a viscosity reduction of the molten resin, until the mold cavity has been filled up, and a second molding step of compressing the resin so charged in the mold cavity by operating the slidable mold element to compress the charged resin to compensate said post-compression margin, so as to allow an effective pressing force to be imposed onto the charged resin within the mold cavity also after the gate has been sealed.

2. A process as claimed in Claim 1, wherein the injection nozzle is throttled while employing a further means for elevating the temperature of the molten resin to realize reduction of viscosity of the molten resin.

3. A process as claimed in claim 1 for effecting injection molding of plastic resin products on an injection molding apparatus wherein further generation of a shearing energy in the injected flow of the molten resin is effected by incorporating a means for throttling the flow path of the molten resin and/or a means for heating the molten resin before being injected into the mold cavity.

4. A process as claimed in claim 1, wherein generation of a shearing energy in the injected flow of the molten resin is effected by incorporating, together with a throttling of the injection nozzle, a means for throttling the flow path of the molten resin and/or a means for heating the molten resin before being injected into the mold cavity

5. A process as claimed in Claim 3 or 4, wherein the injection molding is effected while incorporating a measure for preventing oxidative deterioration of the molded resin.

6. An apparatus for effecting injection moldings of a plastic resin including a metal mold composed of a slidable mold element (32) and a fixed mold element (35) defining together the mold cavity (36), an actuator (33) for sliding the slidable mold element (32) and an injection means having an injection nozzle (20) permissible of adjusting the nozzle flow path section, comprising a means for settling the pertinent position of the slidable mold element (32) relative to the fixed mold element (35) to be determined by taking into account of the amount of volume reduction of the molded resin product due to the cooling thereof after the injection molding including a spacer member (37) interposed between said slidable mold element (32) and said fixed mold element (35) as well as a position sensor (39) for detecting the stroke position of the spacer member (37) and a means for adjusting the flow rate and the molding pressure upon each injection cycle in linkage with a means for varying the flow path section of the nozzle for the molten resin, for realizing reduction in the viscosity of the molten resin and, thus, in the pressure drop of the flowing resin within the mold cavity (36).

7. An apparatus as claimed in Claim 6, wherein at least one further means for elevating the temperature of the molten resin is incorporated in the injection stage, selected from the means for settling a higher temperature of the heater in the screw plasticizing region, for increasing the screw back pressure and for increasing the rate of revolution of the screw.

8. An apparatus as claimed in claim 6, wherein a further means for elevating the temperature of the plasticized resin including a means for throttling the flow path of the molten resins to the mold cavity and/or a means for settling a higher temperature of the heater in the screw plasticing region is provided, for increasing the screw back pressure or for increasing the rate of revolution of the screw.

9. An apparatus as claimed in Claim 8, wherein a means for preventing oxidative deterioration of the molten resin is incorporated in the screw plasticizing region.

10. An apparatus as claimed in claim 6, wherein a means for adjusting the flow rate and the molding pressure upon each injection cycle in linkage with a means for varying the flow path section of the nozzle for the molten resin is provided, for realizing reduction in the viscosity of the molten resin and, thus, in the pressure drop of the flowing resin within the mold cavity.

11. An apparatus as claimed in Claim 10, wherein a means for preventing oxidative deterioration of the molten resin is incorporated in the screw plasticizing region.

## Patentansprüche

1. Verfahren zur Durchführung des Spritzgießens von Kunststoffen mit einer Spritzgießmaschine, ausgestattet mit einer Metallform, die sich zusammensetzt aus einer beweglichen und einer festen Formhälfte, welche gemeinsam den Formhohlraum bilden, einem Stellantrieb zum Verschieben der beweglichen Formhälfte und einer Einspritzvor richtung mit einer Einspritzdüse, die es gestattet, den Durchlaßquerschnitt der Düse zu verändern, wobei das Verfahren eine erste Spritzgießphase umfaßt, bei der eine plastizierte Formmasse in den Formhohlraum eingespritzt wird, der mit Hilfe der beweglichen Formhälfte so eingestellt wurde, daß eine Randschmelze entsteht, die hinterher in einer zweiten Spritzgießphase verdichtet wird, so daß der Einspritzvorgang mit einem verringerten Spritzdruck stattfindet, während in dem Einspritzstrom der Schmelze durch Drosselung der Düse eine Scherenergie erzeugt wird, was eine Temperaturerhöhung und damit eine Verringerung der Viskosität der plastizierten Formmasse zur Folge hat, bis der Formhohlraum gefüllt ist, und wobei sich eine zweite Spritzgießphase anschließt, in der die Formmasse, die so in den Formhohlraum gefüllt wurde, durch Verschieben der beweglichen Formhälfte verdichtet wird, um die Randschmelze auszugleichen, so daß auch nach dem Schließen des Angußteils eine effektive Druckkraft auf die eingefüllte Formmasse in dem Formhohlraum wirksam werden kann.

2. Verfahren nach Anspruch 1, wobei eine Drosselung der Einspritzdüse erfolgt, während eine weitere Vorrichtung zur Erhöhung der Temperatur der plastizierten Formmasse eingesetzt wird, um eine Verringerung der Viskosität der plastizierten Formmasse zu erreichen.

3. Verfahren nach Anspruch 1, wobei das Spritzgießen von Kunststoffen mit einer Spritzgießvorrichtung so durchgeführt wird, daß in dem eingespritzten Strom der Schmelze dadurch eine weitere Scherenergie erzeugt wird, daß eine Vorrichtung zur Drosselung des Fließwegs der plastizierten Formmasse bzw. eine Vorrichtung zur Erwärmung der Schmelze noch vor dem Einspritzen in den Formhohlraum vorgesehen ist.

4. Verfahren nach Anspruch 1, wobei in dem Einspritztstrom der plastizierten Formmasse dadurch eine Scherenergie erzeugt wird, daß neben einer Drosselung der Einspritzdüse eine Vorrichtung zur Drosselung des Fließwegs der Schmelze bzw. eine Vorrichtung zum Erwärmen der Schmelze vor dem Einspritzen in den Formhohlraum vorgesehen ist.

5. Verfahren nach Anspruch 3 oder 4, wobei das Spritzgießen erfolgt und gleichzeitig eine Maßnahme zur Verhinderung eines oxydativen Abbaus der Schmelze ergriffen wird.

6. Einrichtung zur Durchführung des Spritzgießens von Kunststoffen, ausgestattet mit einer Metallform, die sich zusammensetzt aus einer beweglichen Formhälfte (32) und einer festen Formhälfte (35), die gemeinsam den Formhohlraum (36) bilden, einem Stellantrieb (33) zum Bewegen der beweglichen Formhälfte (32) und einer Einspritzvorrichtung, die mit einer Einspritzdüse (20) versehen ist, bei der der Durchlaßquerschnitt eingestellt werden kann, wobei eine Vorrichtung zum Einstellen der passenden Stellung der beweglichen Formhälfte (32) zur festen Formhälfte (35) vorgesehen ist, die unter Berücksichtigung der Volumenverringerung des spritzgegossenen Kunststoffes infolge der nach dem Spritzgießen folgenden Abkühlung zu bestimmen ist, wobei diese Vorrichtung aus einem Distanzstück (37), das zwischen der beweglichen Formhälfte (32) und der festen Formhälfte (35) angeordnet ist, sowie einem Positionssensor (39) zur Bestimmung der Stellung des Distanzstückes (37) besteht, und desweiteren eine Vorrichtung zur Regulierung der Fließgeschwindigkeit und des Einspritzdruckes bei jedem Einspritzzyklus in Verbindung mit einer Vorrichtung zur Veränderung des Durchlaßquerschnitts der Düse für die plastizierte Formmasse vorgesehen ist, so daß eine Verringerung der Viskosität der plastizierten Formmasse und damit des Druckabfalls der fließenden Formmasse im Formhohlraum (36) erreicht werden kann.

7. Einrichtung nach Anspruch 6, wobei mindestens eine weitere Vorrichtung zur Erhöhung der Temperatur der plastizierten Formmasse in der Einspritzphase vorgesehen ist, und wobei diese aus den Vorrichtungen zum Einstellen einer höheren Temperatur des Heizelements in der Schneckenplastiziereinheit, zur Erhöhung des Staudrucks der Schnecke und zur Erhöhung der Schneckendrehzahl ausgewählt wird.

8. Einrichtung nach Anspruch 6, wobei eine weitere Vorrichtung zur Erhöhung der Temperatur der plastizierten Formmasse vorgesehen ist, die aus einer Vorrichtung zur Drosselung des Fließwegs der plastizierten Formmasse zum Formhohlraum bzw. einer Vorrichtung zum Einstellen einer höheren Temperatur des Heizelementes in der Schneckenplastiziereinheit besteht und die so der Erhöhung des Schneckenstaudrucks oder der Erhöhung der Schneckendrehzahl dient.

9. Einrichtung nach Anspruch 8, wobei in der Schneckenplastiziereinheit eine Vorrichtung zur Verhinderung von oxydativem Abbau der plastizierten Formmasse vorgesehen ist.

10. Einrichtung nach Anspruch 6, wobei eine Vorrichtung zur Veränderung der Fließgeschwindigkeit und des Einspritzdruckes bei jedem Einspritzzyklus in Verbindung mit einer Vorrichtung zur Veränderung des Durchlaßquerschnitts der Düse für die plastizierte Formmasse vorgesehen ist, wodurch eine Verringerung der Viskosität der plastizierten Formmasse und damit des Druckabfalls der fließenden Formmasse im Formhohlraum erreicht wird.

11. Einrichtung nach Anspruch 10, wobei eine Vorrichtung zur Vermeidung von oxydativem Abbau der plastizierten Formmasse in der Schneckenplastiziereinheit vorgesehen ist.

## Revendications

1. Procédé pour effectuer le moulage par injection de produits en résine de matière plastique dans un appareil de moulage par injection incluant un moule métallique constitué d'un élément de moule pouvant coulisser et d'un élément de moule fixe définissant ensemble la cavité de moulage, un vérin pour faire coulisser l'élément de moule pouvant coulisser et des moyens d'injection comportant une buse d'injection permettant d'ajuster la section de voie d'écoulement de la buse, comprenant une première étape de moulage consistant à injecter une résine fondue dans la cavité de moulage qui a été préréglée par l'élément de moule pouvant coulisser de façon à inclure une marge de post-compression à comprimer ensuite dans une seconde étape de moulage, pour effectuer l'injection sous une pression de moulage réduite, tout en provoquant la génération d'une énergie de cisaillement dans le flux injecté de la résine fondue par étranglement de la buse, pour effectuer une élévation de température et, ainsi, une réduction de viscosité de la résine fondue, jusqu'à ce que la cavité de moulage soit complètement remplie, et une seconde étape de moulage consistant à comprimer la résine ainsi chargée dans la cavité de moulage en actionnant l'élément de moule pouvant coulisser pour comprimer la résine chargée pour compenser ladite marge de post-compression, de façon à permettre une force de pressage efficace imposée sur la résine chargée à l'intérieur de la cavité de moulage également après que l'entrée a été fermée de façon étanche.

2. Procédé selon la revendication 1, dans lequel la buse d'injection est étranglée tout en employant d'autres moyens pour élever la température de la résine fondue pour réaliser la réduction de la viscosité de la résine fondue.

3. Procédé selon la revendication 1 pour effectuer le moulage par injection de produits en résine de matière plastique dans un appareil de moulage par injection, dans lequel une génération autre d'une énergie de cisaillement dans le flux injecté de la résine fondue est effectuée en incorporant des moyens pour étrangler la voie d'écoulement de la résine fondue et/ou des moyens pour chauffer la résine fondue avant d'être injectée dans la cavité de moulage.

4. Procédé selon la revendication 1, dans lequel la génération d'une énergie de cisaillement dans le flux injecté de la résine fondue est effectuée en incorporant, en même temps qu'un étranglement de la buse d'injection, des moyens pour étrangler la voie d'écoulement de la résine fondue et/ou des moyens pour chauffer la résine fondue avant d'être injectée dans la cavité de moulage.

5. Procédé selon la revendication 3 ou 4, dans lequel le moulage par injection est effectué tout en incorporant une mesure pour éviter la détérioration d'oxydation de la résine fondue.

6. Appareil pour effectuer le moulage par injection d'une résine de matière plastique incluant un moule métallique constitué d'un élément de moule (32) pouvant coulisser et d'un élément de moule fixe (35) définissant ensemble la cavité de moulage (36), un vérin (33) pour faire coulisser l'élément de moule (32) pouvant coulisser et des moyens d'injection ayant une buse d'injection (20) permettant de régler la section de la voie d'écoulement de la buse, comprenant des moyens pour établir la position pertinente de l'élément de moule (32) pouvant coulisser par rapport à l'élément de moule fixe (35) à déterminer en tenant compte de la quantité de réduction de volume du produit de résine moulé due au refroidissement de celui-ci après le moulage par injection, incluant un organe d'espacement (37) interposé entre ledit élément de moule (32) pouvant coulisser et ledit élément de moule fixe (35) ainsi qu'un capteur de position (39) pour détecter la position de course de l'organe d'espacement (37), et des moyens pour régler le débit et la pression de moulage lors de chaque cycle d'injection en liaison avec des moyens pour faire varier la section de voie d'écoulement de la buse pour la résine fondue, pour réaliser une réduction de la viscosité de la résine fondue et, ainsi, une chute de pression de la résine s'écoulant à l'intérieur de la cavité de moulage (36).

7. Appareil selon la revendication 6, dans lequel d'autres moyens pour élever la température de la résine fondue sont incorporés dans l'étage d'injection, choisis à partir des moyens pour établir une température plus élevée du réchauffeur dans la zone de plastification de la vis, pour augmenter la contre-pression de la vis, et pour augmenter la vitesse de rotation de la vis.

8. Appareil selon la revendication 6, dans lequel d'autres moyens pour élever la température de la résine plastifiée, incluant des moyens pour étrangler la voie d'écoulement de la résine fondue vers la cavité de moulage et/ou des moyens pour établir une température plus élevée du réchauffeur dans la zone de plastification de la vis sont prévus, pour augmenter la contre-pression de la vis ou pour augmenter la vitesse de rotation de la vis.

9. Appareil selon la revendication 8, dans lequel des moyens pour éviter la détérioration d'oxydation de la résine fondue sont incorporés dans la zone de plastification de la vis.

10. Appareil selon la revendication 6, dans lequel des moyens pour régler le débit et la pression de moulage lors de chaque cycle d'injection en liaison avec des moyens pour faire varier la section de voie d'écoulement de la buse pour la résine fondue sont prévus pour réaliser une réduction de la viscosité de la résine fondue et, ainsi, une chute de pression de la résine s'écoulant à l'intérieur de la cavité de moulage.

11. Appareil selon la revendication 10, dans lequel des moyens pour éviter une détérioration d'oxydation de la résine fondue sont incorporés dans la zone de plastification de la vis.
